# EUROPEAN PATENT APPLICATION

(11) **EP 2 653 451 A1**
(43) Date of publication of application: **23.10.2013**
(21) Application number: 12165025.3
(22) Date of filing: 20.04.2012
(51) Int. Cl.: C02F 9/00, C10L 9/08, C02F 1/44, C02F 103/36

(54) **Method and apparatus for the treatment of process water from an organic material conversion process**

(71) Applicant: CS Carbon Solutions, 14532 Kleinmachnow (DE)
(72) Inventor: Stark, Arne, Dr., 14163 Berlin (DE); Maas, Robert, Dr., 14471 Potsdam (DE)
(74) Representative: HOFFMANN EITLE

(57) **Abstract**

The invention relates to a method for the treatment of process water (2) from an organic material conversion process. The method comprises a first separation step of separating the process water (2) from a conversion product obtained in the organic material conversion process and a second separation step of separating the process water (2) obtained in the first separation step into a first component (8) and a second component (10) so that a level of chemical oxygen demand in the first component (8) is higher than a level of chemical oxygen demand in the second component (10). The method further comprises a membrane filtering step of filtering the second component (10) using a membrane filter (12) comprising a dense membrane. Further, the invention relates to an apparatus for the treatment of process water (2) from an organic material conversion process. The apparatus comprises a first separation unit for separating the process water (2) from a conversion product obtained in the organic material conversion process and a second separation unit (4) connected to the first separation unit, wherein the second separation unit (4) is arranged to receive the process water (2) from the first separation unit and to separate the process water (2) into a first component (8) and a second component (10) so that a level of chemical oxygen demand in the first component (8) is higher than a level of chemical oxygen demand in the second component (10). The apparatus further comprises a membrane filter (12) connected to the second separation unit (4) and comprising a dense membrane, wherein the dense membrane is arranged to receive the second component (10) from the second separation unit (4) and to filter the second component (10).

## Description

### Field of the Invention

According to a first aspect, the invention relates to a method for the treatment of process water from an organic material conversion process. According to a second aspect, the invention relates to an apparatus for the treatment of process water from an organic material conversion process. The present invention may be employed for hydrothermal carbonisation (HTC) processes or other processes in which a conversion of an organic material or organic materials occurs.

### Background Art

Process water can be degraded to a distinct level by aerobic and anaerobic wastewater treatment technologies, as is disclosed in DE-A-10 2009 024 287. The remaining part of the process water still has a high level of chemical oxygen demand (COD) which is mostly refractory, i.e., non-biodegradable, in its nature. Thus, the COD is not fully degradable by a biological treatment. It has been suggested to treat this remaining non-biodegradable COD by adsorption with activated carbon (H.-G. Ramke et al., Machbarkeitsstudie zur Energiegewinnung aus organischen Siedlungsabfällen durch Hydrothermale Carbonisierung, Deutsche Bundesstiftung Umwelt, Abs chlussbericht, Höxter, October 2010, pp. 197 ff.). However, this is a rather expensive approach since the remaining refractory COD has to be treated separately and the anaerobic reactors presented are not economically feasible. If high salt concentrations in the filtrate stream are present, these will be found in the effluent of the anaerobic reactor as well and further treatment will be necessary. Another treatment method of wastewater and CO₂ containing gases is disclosed in DE-B-10 2010 026 345. The wastewater is fed into basins with water plants which minimise the COD. The organic pollutants in the wastewater and the nutrients will be transferred to the water plants (e.g., duckweed or water hyacinths). The excess water is consumed by the plant roots, evaporated by the plant leaves and discharged from the specially designed greenhouse. The water plants are planted in basins which are arranged in up to 12 terraces over each other, in order to minimise area consumption. However, the area consumption is still high and, for a hydrothermal carbonisation (HTC) plant with a biomass input of 40,000 t per year, an estimated area of 1.5 hectares is required. Hence, also this approach exhibits problems with regard to economical feasibility.

In WO-A-2009/127727, an oxidising step is proposed to treat the liquid phase of a separation step after a second process step in a two-step HTC reactor by means of an oxidising agent, such as air.

Another treatment method for process water from an HTC process is disclosed in EP-A-2 206 688. The process water is oxidised under the conditions present in the HTC process by means of oxidising agents, such as oxygen, air or hydrogen peroxide. First, the product of the HTC process, namely a mixture of process water and solids, is separated under the conditions of the process. Subsequently, the process water is mixed with an oxidising agent (air, oxygen or hydrogen peroxide) and oxidation takes place, preferably with a catalyst present, e.g., ferrous salts. Oxidising agents, such as oxygen and hydrogen peroxides, and catalysts are expensive. Alternatively air can be used. However, all of the aforementioned oxidising agents produce large amounts of flue gases which have to be treated by expensive means. Therefore, also this method is problematic in terms of economical feasibility.

US-A-2006/0260186 relates to a method and an apparatus for intensifying the energy content of an organic material by converting the material into hydrocarbons and to the resulting product thereof. The resulting product is separated in a product recovery system using a membrane filter and an oil separator. A membrane filtration permeate may be further processed by feeding it to a separation unit, such as a reverse osmosis membrane unit.

DE-A-10 2009 010 233 discloses a process for generating coal from biomass by means of thermal carbonisation. Process water originating from this process may be purified either by ultrafiltration or by reverse osmosis.

However, the known methods and apparatuses for the treatment of process water from an organic material conversion process are limited in terms of efficiency and costs involved.

### Summary of the Invention

Accordingly, it is an object of the present invention to provide a method for the efficient and inexpensive treatment of process water from an organic material conversion process. Moreover, the invention aims to provide an apparatus for performing this method.

These goals are achieved by a method with the technical features of claim 1 and an apparatus with the technical features of claim 10. Preferred embodiments of the invention follow from the dependent claims.

According to the first aspect, the present invention provides a method for the treatment of process water from an organic material conversion process, the method comprising a first separation step of separating the process water from a conversion product obtained in the organic material conversion process and a second separation step of separating the process water obtained in the first separation step into a first component and a second component so that a level of chemical oxygen demand (COD) in the first component is higher than a level of COD in the second component.

Further, the method comprises a membrane filtering step of filtering the second component using a membrane filter comprising a dense membrane.

The COD is a commonly used measure of the amount of organic compounds in water and, thus, a reliable measure of the water quality. The COD is expressed in grams per litre (g/l) which indicates the mass of oxygen in grams consumed per litre of solution, i.e., required to fully oxidise the organic compounds to carbon dioxide.

The term "dense membrane" is well-known in the art of membrane filtering and defines a substantially non-porous membrane, allowing the transport of a medium therethrough mainly or only by diffusion. Preferably, herein, the dense membrane is a membrane with a salt retention of 90% or more, more preferably 92% or more, yet more preferably 94% or more, still more preferably 96% or more and yet still more preferably 98% or more for 32,000 ppm (parts per million) NaCl as the salt at a pressure of 55 bar, a temperature of 25°C and a membrane yield of 10%. The term "salt retention" is defined as the fraction of the salt present in the medium to be filtered by the membrane which remains in the retentate of the membrane after the filtering process.

The dense membrane may be a membrane which is configured so that a permeate of the membrane filter has a level of COD of less than 2.5 g/l and contains less than 2% of monovalent and polyvalent ions present in the process water obtained in the first separation step.

In addition to providing a permeate with a low COD level and a low salt content, dense membranes offer the further advantage that the permeate is substantially free of refractory, i.e., non-biodegradable COD. Herein, the expression "substantially free of refractory COD" specifies that refractory COD is present in an amount of less than 5%, preferably less than 2%, more preferably less than 1%. Therefore, permeates of dense membranes can be disposed to a public sewage system and/or treated elsewhere and/or reused in the organic material conversion process, such as an HTC process.

A biomass input into the organic material conversion process as a starting product may be at least weakly acidic. Specifically, the biomass may have a pH value of less than 7, preferably 5.5 or less, more preferably in a range from 3 to 5.5 and even more preferably in a range from 3 to 4.5. The term "biomass" as used herein is broadly understood as encompassing all kinds of plant and animal material and material derived from the same. Without limitation, examples of biomass are crop, agricultural food and waste, feed crop residues, wood (such as wood flour, wood waste, scrap wood, sawdust, chips and discards), straw (including rice straw), grass, leaves, chaff, and bagasse. Furthermore, industrial and municipal wastes, including waste paper can be exemplified.

The process water from the organic material conversion process may be at least weakly acidic. Specifically, the process water to be treated may have a pH value of less than 7, preferably 5.5 or less, more preferably in a range from 3 to 5.5 and even more preferably in a range from 3 to 4.5.

The conversion product obtained in the organic material conversion process may be a solid material, such as coal or the like. Further, the conversion product obtained in the organic material conversion process may be a liquid material, such as oil or the like.

The permeate of the membrane filter, i.e., the flow passing through the membrane filter, is low in COD and thus suitable for further treatment by inexpensive processes, such as biological treatment. Further, the permeate may be disposed to the public sewage system in an inexpensive manner or treated onsite in an industrial wastewater treatment plant. Moreover, the low salt load of the permeate, e.g., a load of less than 2% of monovalent and polyvalent ions present in the process water obtained in the first separation step, allows for an efficient reuse of the permeate in the organic material conversion process, thereby reducing both the amount of wastewater to be disposed of and the need for fresh water in the organic material conversion process. In this way, the costs of the process water treatment can be considerably reduced. The monovalent ions may be, for example, Na⁺, K⁺, Cl⁻ etc. and the polyvalent ions may be, for example, Mg²⁺, SO4 ²⁻ , Fe³⁺ etc.

The process water obtained in the first separation step is subjected to a second separation step prior to the membrane filtering step. The second component obtained in the second separation step, which has a lower level of COD than the first component obtained in the second separation step, is filtered in the membrane filtering step. In this way, the membrane yield of the treatment process of the invention can be improved over the membrane yield of a process in which membrane filtering alone is performed.

Herein, the term "membrane yield" defines the percentage of the mass fraction of the process water which is present in the permeate of the membrane filter. For example, a 100% membrane yield specifies that 100% of the mass of the process water are present in the permeate of the membrane filter, while a membrane yield of 0% specifies that the entire mass of the process water remains in the retentate (concentrate) of the membrane filter, i.e., the flow which is retained by the membrane filter. By improving the yield of the membrane filter, the efficiency of the treatment process is enhanced. The first separation step may be carried out by mechanical and/or thermal steps, such as filtering and/or evaporation or the like.

The method of the invention can be used for any type of process in which a conversion of an organic material or organic materials occurs. The method may be particularly advantageously applied to a hydrothermal carbonisation (HTC) process.

The HTC process leads to a coal slurry which is separated in the first separation step by mechanical and/or thermal means to gain a coal or coal-like material as the conversion product and process water. The coal or coal-like material can be used for combustion processes or the like or may be used as a raw material. A biomass fed to the HTC process should have a dry solids content in a range from 20 to 30%, preferably approximately 25%, for an economically feasible operation of the HTC system. Many types of available biomass have a higher dry solids content, e.g., leaves from street collection or the like. These types of biomass have to be mixed with water, preferably water from the HTC process, in order to achieve the desired dry solids content.

The HTC technology provides the following main advantages:
A combustion material with a better lower heating value than the original wet biomass can be obtained. Further, a wet biomass with a bad filterability in terms of the achievable total solids content is transformed into a coal slurry which can be easily separated in the first separation step into a wet HTC coal or coal-like material and process water by mechanical means. The dry solids content of the separated HTC coal or coal-like material can be easily doubled as compared to the input wet biomass by mechanical means. Moreover, the salts of the biomass, i.e., the monovalent and polyvalent ions, are efficiently separated from the coal or coal-like material and thus mainly present in the process water obtained in the first separation step.

The HTC coal or coal-like material obtained as a conversion product in the first separation step only contains a fraction of monovalent ions, such as chlorides, K ions and Na ions. The chlorides, the K ions and the Na ions are mainly found in the process water obtained in the first separation step. Usually, the biomass used in the HTC process is low in chlorides, K ions and Na ions, leading to a low chloride, K and Na content of the HTC coal. Since most of the chlorides, the K ions and the Na ions are removed from the HTC coal slurry in the first separation step, the HTC coal can be advantageously used in a subsequent combustion process, providing a low corrosion performance of the combustion gases and a high softening temperature of a resulting furnace slag.

Through the chemical conversion process under the specific conditions present in the HTC process, such as temperature and pressure, the biomass fed to the HTC process is transformed to a slurry consisting mainly of coal particles and salts and/or minerals, which are suspended or dissolved, and organic components dissolved in water. After the first separation step, the dissolved organic components and the salts and/or minerals are mainly present in the process water. The dissolved organic components are of a diverse nature and are mainly responsible for the level of COD in the process water.

The biological or biochemical oxygen demand (BOD) is the amount of dissolved oxygen needed by aerobic biological organisms in a body of water to break down organic material present in the water at a certain temperature over a specific period of time. The 5-day BOD value is specified in grams of oxygen consumed per litre of water during five days of incubation at 20°C. A part of the COD of the process water is refractory in its nature, i.e., non-biodegradable.

The presence of refractory COD in the process water is indicated by a ratio of the COD to the 5-day biological or biochemical oxygen demand (BOD5) of more than 2.

The process water obtained in the first separation step is a polluted wastewater stream with high COD levels and organic as well as inorganic impurities which cannot be disposed to receiving waters and wastewater treatment plants due to common legal requirements. Therefore, a treatment of the HTC process water is necessary.

The method of the invention helps to resolve the following issues associated with the treatment of HTC process water and, thus, can be applied in a particularly advantageous manner to this process.

Only a part of the HTC process water can be reused in the mixing stage of the HTC process, depending on the amount of total solids present in the biomass input to the HTC process. The process water being reused in the mixing stage should be low in salt content to maintain a high quality of the HTC coal, as has been detailed above. Since the permeate of the membrane filter has a low salt load, e.g., less than 2% of monovalent and polyvalent ions present in the process water obtained in the first separation step, at least a part of the permeate can be reused in the mixing stage of the HTC process without compromising the quality of the HTC coal. In this way, the need for fresh water in the HTC mixing stage can be reduced or even eliminated, thus further improving the efficiency and reducing the costs of the process. Moreover, the amount of wastewater which has to be disposed of is reduced.

Further, since the salt content of the permeate of the membrane filter is low, problems associated with a possible corrosion of the HTC equipment can be reliably prevented in an efficient and inexpensive manner.

Preferably, the amount of process water being reused in the mixing stage of the HTC process does not exceed the amount needed to adjust the total solids content of the input biomass to a desired value. A high total solids content above 20% is preferable because, in this case, the operation of the HTC plant is more feasible from a technical and economical point of view. A total solids content of 25% is particularly advantageous for the operation of the HTC process. Above a total solids content of 25%, the pumpability of certain types of biomass might be limited, thus rendering a transport of the biomass into the HTC process difficult or even impossible.

Refractory COD must be removed from the process water prior to disposal thereof. In some countries, a bio-degradable and low COD, such as less than 2.5 g/l, in the water to be disposed of has to be achieved due to legal regulations. Otherwise, disposal of the water is prohibited or may be only allowed if expensive additional fees are paid. The COD to BOD5 ratio should be 2 or less in the treated process water. An efficient removal of refractory COD from the permeate of the membrane filtering step is achieved by using a dense membrane in the membrane filter, as has been detailed above.

The salts present in the biomass must be excluded from the HTC process to achieve a good quality of the HTC coal or coal-like material. Hence, the treatment of the process water, in which most of the salts are present, has to include the separation of these salts from the water which is to be reused in the HTC process. In particular, monovalent ions, such as chlorides, K ions or Na ions, have to be removed. A low salt load in the return stream to the HTC mixing stage, e.g., less than 2% of the monovalent and polyvalent ions present in the process water obtained in the first separation step, is acceptable while its overall salt load is low.

Since the permeate of the membrane filter has a low salt load, e.g., less than 2% of monovalent and polyvalent ions present in the process water obtained in the first separation step, the permeate or at least a part thereof can be efficiently reused in the HTC process, as has been detailed above.

Subsequent drying of the coal or coal-like material separated in the first separation step leads to nearly dry coal particles and a dryer condensate. Other condensates from condensation processes from different sources of the HTC process, such as excess steam at varying pressure levels, may also be present. The process water from the HTC process and these condensates can only be partly reused in the HTC process due to the above-mentioned requirements regarding the total solids content of the mixed biomass sludge. Further, most of the salt load of the process water is to be excluded from the HTC process, as has been detailed above.

The condensates and the process water are very different in their nature. Specifically, the condensates are low salt fluids with medium levels of COD, i.e., more than 2.5 g/l and less than the COD of the process water obtained in the first separation step. The COD level of the process water obtained in the first separation step may be in a range from 20 to 120 g/l, preferably from 30 to 60 g/l and more preferably from 45 to 55 g/l. Due to these different compositions of the condensates and the process water, the methods for their treatment may have different requirements. The above-mentioned legal requirements with regard to the COD level of wastewater to be disposed of also apply to these condensates.

In one embodiment, the method of the invention may be applied to a combination of the HTC process water and/or the condensates produced in the HTC process and/or flue gases originating from the HTC process, as will be detailed below.

The second separation step may be a nanofiltration step, an evaporation step or a combined nanofiltration and evaporation step. The nanofiltration step may be performed by using a membrane filter comprising a nanofiltration membrane.

The nanofiltration step separates the process water obtained in the first separation step into a retentate (concentrate) as the first component and a permeate as the second component. The retentate and the permeate of the nanofiltration step have the following COD characteristics.

The major part of the COD is present in the retentate. Specifically, the COD level in the retentate may be at least twice as high as the COD level in the process water obtained in the first separation step. A part of the original COD load present in the process water obtained in the first separation step may pass through the filter, such as the nanofiltration membrane, and be present in the permeate. A medium level of COD may be present in the permeate of the nanofiltration step, which is lower than the COD of the process water obtained in the first separation step and higher than the low COD level, e.g., higher than 2.5 g/l.

The salt and/or mineral content distribution between the nanofiltration retentate and the nanofiltration permeate depends on the characteristics of the filter used, such as the membrane characteristics of a nanofiltration membrane. The filter, e.g., the nanofiltration membrane, may be configured so that it retains most of the salts present in the process water obtained in the first separation step, for example, more than 50%, preferably 70% or more, more preferably 90% or more, yet more preferably 95% or more and still more preferably 98% or more thereof.

Further, the filter, e.g., the nanofiltration membrane, may be configured so that it retains, for example, 10% or more, preferably 20% or more, more preferably 40% or more, yet more preferably 50% or more, still more preferably 60% or more and yet still more preferably 70% or more of the monovalent ions present in the process water obtained in the first separation step and/or, for example, 50% or more, preferably 60% or more, more preferably 70% or more, yet more preferably 80% or more and still more preferably 90% or more of the polyvalent ions present in the process water obtained in the first separation step.

Alternatively, the filter, e.g., the nanofiltration membrane, may be configured so that most of the salts present in the process water obtained in the first separation step, for example, more than 50%, preferably 70% or more, more preferably 90% or more, yet more preferably 95% or more and still more preferably 98% or more thereof, pass through the filter into the nanofiltration permeate.

Further, the filter, e.g., the nanofiltration membrane, may be configured so that, for example, 10% or more, preferably 20% or more, more preferably 40% or more, yet more preferably 50% or more, still more preferably 600 or more and yet still more preferably 70% or more of the polyvalent ions present in the process water obtained in the first separation step and/or, for example, 50% or more, preferably 60% or more, more preferably 70% or more, yet more preferably 80% or more and still more preferably 90% or more of the monovalent ions present in the process water obtained in the first separation step pass through the filter into the nanofiltration permeate.

If the filter used in the nanofiltration step, e.g., the nanofiltration membrane, retains most of the salts present in the process water obtained in the first separation step, most of the salt load will be found in the retentate and therefore, preferably, the retentate is not returned to the mixing stage of an HTC process but disposed of and/or treated elsewhere, for example, in a combustion unit which will be described below. Treatment of the nanofiltration retentate in the combustion unit is particularly preferable if the COD level of the retentate is equal to or higher than approximately 100 g/l. In this case, the retentate has a lower heating value of zero or more, so that less auxiliary fuel is needed for the combustion thereof.

The lower heating value of the process water, the retentate and the permeate is determined by subtracting the evaporation enthalpy of the remaining water of the process water, the retentate and the permeate, respectively, from the energy content or heating value of the total solids present in the process water, the retentate and the permeate, respectively.

If the filter used in the nanofiltration step, e.g., the nanofiltration membrane, is configured so that most of the salts present in the process water obtained in the first separation step pass through the filter, the salts from the process water are mainly present in the nanofiltration permeate.

The retentate of the nanofiltration step may have a medium salt load, e.g., 30% or less of the original monovalent ions and less than 10% of the polyvalent ions present in the process water, and a high level of COD, i.e., a COD level which is higher than the COD level of the process water obtained in the first separation step. Hence, in this case, the retentate of the nanofiltration step may be returned to the mixing stage of an HTC process without compromising the quality of the HTC coal or coal-like material.

Moreover, the second separation step may be an evaporation step. This approach is particularly advantageous if an inexpensive heat source, such as cooling water of a combined heat and power unit, is available. The evaporation step may be a vacuum evaporation step. In the evaporation step, the process water obtained in the first separation step is separated into a concentrate containing most of the COD load of the process water and nearly all of the salts thereof, e.g., 90% or more, preferably 95% or more and more preferably 98% or more thereof, as the first component and vapour as the second component. The vapour generated in the evaporation step has a low salt content and a medium level of COD after condensation thereof. Further, small amounts of flue gases may be generated in the evaporation step which may be treated in the combustion unit, as will be detailed below. Condensation of the vapour separated in the evaporation step produces a condensate with a composition which is similar to that of the above-mentioned condensates from the HTC process. The concentrate separated in the evaporation step as the first component can be advantageously used in the combustion step due to its high COD level, preferably above 100 g/l. Preferably, the lower heating value of the concentrate produced in the evaporation step is zero or higher, so that less auxiliary fuel is required for the combustion thereof. The condensed vapour of the evaporation step, which has a low salt content and a medium COD level, is fed to the membrane filter as the second component to be filtered in the membrane filtering step, leading to an improvement of the membrane yield of the treatment process.

Moreover, the second separation step may be a combined nanofiltration and evaporation step. This approach is particularly beneficial if the membrane yield of the nanofiltration step is not sufficient in generating a retentate which has a lower heating value of approximately zero or above zero and can therefore only be burned in the combustion step with auxiliary fuel. In this case, the combination of a nanofiltration step with an evaporation step can be advantageously used to improve the overall efficiency of the second separation step.

In this configuration, four flows are generated, namely the permeate of the nanofiltration, the condensate of the vapour from the evaporation step, minor amounts of flue gases and the concentrate of the evaporation step. Depending on the characteristics of the filter used for the nanofiltration, e.g., the nanofiltration membrane, the major part of the salt load is either present in the nanofiltration permeate or the nanofiltration retentate. In this combined approach, the nanofiltration may be performed prior to the evaporation. Specifically, the nanofiltration retentate may be fed as an input flow to the evaporation unit where it is separated into a concentrate as the first component and vapour as the second component.

The explanations provided above for the salt content distribution in the nanofiltration step also apply to the combined nanofiltration and evaporation step. The flue gases generated in this step may be treated in the combustion unit, as will be further detailed below.

Using a nanofiltration and/or evaporation step as the second separation step further provides the following advantages:
The nanofiltration step, the evaporation step and the combined nanofiltration and evaporation step enhance the performance of the subsequent membrane filtering step, improving the membrane yield of the treatment process. In particular, if a reverse osmosis membrane is used in the membrane filter of the membrane filtering step, the membrane yield of the reverse osmosis filtering step may be increased from a level of approximately 37% to a level above 75 to 85%.
The retentate of the membrane filtering step may have a medium salt content and a high level of COD and may thus be burned in the combustion unit or at least partly returned to the mixing stage of the organic material conversion process, such as an HTC process, to adjust the total solids content of the input biomass to a desired value and/or improve the quality of the HTC coal or coal-like material. The nanofiltration retentate may have a high salt load, e.g., more than 50% of the monovalent ions and more than 90% of the polyvalent ions present in the process water obtained in the first separation step, and a high level of COD, preferably above 100 g/l. In this case, the nanofiltration retentate can be advantageously burned in the combustion unit, allowing for the salts contained therein to be removed as ash in a simple and efficient manner.

Further, the retentate of the membrane filtering step may have a high salt content and a high level of COD, preferably above 100 g/l. In this case, the retentate may be burned in the combustion unit where salts can be removed and water present in the retentate is excluded as vapour. A nanofiltration retentate having a medium salt content and a high level of COD may be at least partly used in the mixing stage of an HTC process to adjust the total solids content of the input biomass to a desired value and/or improve the yield of the HTC process. The remaining part of the nanofiltration retentate may be burned in the combustion unit.

The concentrate produced in the evaporation step may contain nearly all salts and most of the COD load. In this case, the concentrate can be advantageously used as a fuel in the combustion unit where the salts from the process water can be removed as ash in a simple and efficient manner. Further, in this case, the condensed vapour (condensate) of the evaporation step contains nearly no salts and a medium level of COD. Thus, the retentate of the membrane filtering step may be used partly in the mixing stage of an HTC process. The remaining part or all of the membrane filter retentate may be burned in the combustion step. Preferably, the lower heating value of the retentate is equal to or greater than zero. In this case, the retentate may be used as a supplementary heat source for steam generation or other heat sinks in the HTC process. Further, the retentate may be sold as a liquid fuel.

A nanofiltration membrane yield in the nanofiltration step can be enhanced to obtain a retentate with a high salt content and a high level of COD. Thus, the nanofiltration membrane retentate may be more economically burned in the combustion step, saving money for expensive auxiliary fuel, such as fossil fuel, in the combustion unit.

Moreover, the membrane yield of the nanofiltration membrane can be enhanced to obtain a retentate with a medium salt content and a high level of COD. In this case, the retentate can be partly returned to the mixing stage of an HTC process to adjust the total solids content of the input biomass to a desired value and/or improve the yield of the HTC process. Further, the nanofiltration retentate may be partly or entirely burned in the combustion unit.

A low level of COD of less than 2.5 g/l and a low salt load of less than 2% of monovalent and polyvalent ions present in the process water obtained in the first separation step may be achieved in the permeate of the membrane filtering step by using the membrane filter comprising the dense membrane, as has been detailed above.

In one embodiment, the membrane filtering step is a reverse osmosis filtering step using a reverse osmosis membrane filter comprising a reverse osmosis membrane as the dense membrane. In this case, the filtering step can be performed in a particularly efficient manner, leading to a permeate with a low level of biodegradable COD and a low salt content which can be easily disposed to a municipal or industrial sewage system and/or a wastewater treatment plant. Further, the permeate may be used as a fresh water substitute in the organic material conversion process, e.g., in an HTC process.

The membrane filtering step, e.g., a reverse osmosis filtering step, may be combined with an evaporation step in order to achieve a further thickening of the membrane filter retentate.

As has been mentioned above, the method of the invention may further comprise a combustion step of combusting at least a part of the first component obtained in the second separation step and/or at least a part of the retentate of the membrane filter obtained in the membrane filtering step. In this case, at least a part of the salt load present in the first component and/or the retentate of the membrane filter can be removed from the organic material conversion process as ash in a reliable and efficient manner. Preferably, the lower heating value of the first component and/or the membrane filter retentate is zero or more, so that less auxiliary fuel is needed for the combustion thereof. More preferably, the lower heating value of the first component and/or the membrane filter retentate is in a range from 3 to 5 MJ/kg. Moreover, flue gases from the organic material conversion process, such as an HTC process, may be burned in the combustion step. In some embodiments, external supplementary fuels, such as heating oil, natural gas, biogas and the like, may be used in the combustion step.

Preferably, the lower heating value of the total solids content in the first component and/or the membrane filter retentate is as high as or higher than the energy needed for the evaporation of the remaining water in the first component and/or the membrane filter retentate, respectively.

In the combustion step, flue gases from the organic material conversion process, at least a part of the first component, at least a part of the membrane filter retentate, external supplementary fuel or a combination of these components can be treated. Therefore, the efficiency of the method of the invention can be further improved.

Refractory COD may be burned in the combustion step with the first component and/or the membrane filter retentate or returned to the mixing stage of the organic material conversion process if the salt content is at least medium or even low. The salt load in the first component and/or the membrane filter retentate can be removed as ash after the combustion step.

Further, water from the treatment process can be excluded from the organic material conversion process, such as an HTC process, as water vapour in the combustion step, thereby lowering the amount of water to be disposed to a wastewater treatment plant. In this way, a combustion unit used in the combustion step can serve as a sink for excess water which cannot be reused in the organic material conversion process, such as an HTC process.

At least a part of a combustion heat generated in the combustion step may be used in the organic material conversion process and/or a processing step of the conversion product, such as a drying step, a further separation step, e.g., by evaporation, or the like. In this way, the treatment process can be carried out in a particularly energy and cost efficient manner. The combustion heat may be transferred from the combustion unit, for example, by using a heat exchanger, a heat pipe or any type of heat carrier, such as oil or the like.

In particular, at least a part of the combustion heat may be used for the generation of steam in a steam generator, as will be further detailed below.

In one embodiment, the method of the invention further comprises a step of returning at least a part of the permeate of the membrane filter to the organic material conversion process. In particular, at least a part of the membrane filter permeate may be reused for adjusting the total solids content of a biomass input into the organic material conversion process, for example, in the mixing stage of an HTC process, to a desired value.

Further, at least a part of the permeate of the membrane filter may be supplied to a steam generator for generating steam to be used in the organic material conversion process, such as an HTC process. Moreover, a part of the membrane filter permeate may be used for adjusting the total solids content of the biomass in the organic material conversion process, while another part of the membrane filter permeate may be supplied to the steam generator.

In this way, the membrane filter permeate may be used as a substitute for fresh water in the steam generator, thus leading to a reduction in fresh water consumption and a lower amount of water to be disposed to a public or industrial wastewater treatment plant. The disposal of wastewater to a wastewater treatment plant is expensive and fresh water has to be bought. Therefore, an at least partial reuse of the membrane filter permeate offers a further reduction of the process costs.

At least a part of the heat required for the generation of steam in the steam generator may be provided in the form of combustion heat from the combustion unit.

Such a reuse of at least a part of the membrane filter permeate can be particularly advantageously applied to an HTC process. In particular, the HTC process uses as a favourable implementation a steam generator producing steam to heat the biomass to the temperature levels needed in the process. This steam generator usually uses a substantial amount of fresh water in the process. However, water with a low salt and organic content, such as the membrane filter permeate, is acceptable for use in the steam generator as a fresh water substitute.

According to an embodiment of the invention, at least a part of the membrane filter permeate may be used for generating steam in the HTC steam generator, thereby reducing or even eliminating the need for fresh water. Moreover, the amount of wastewater which has to be disposed of is reduced. The amount of steam needed in the HTC process can be as high as the amount of the membrane filter permeate, so that the HTC process can be performed in a wastewater free manner.

The HTC process produces steam containing organic compounds. The steam may be condensed in a scrubber and the organic compounds are either present in the condensates or will be released in the flue gases of the scrubber. These flue gases may be burned in the combustion step, as has been detailed above.

Further, if the membrane filter permeate is used for steam generation, it may be treated to improve the input quality to the steam generator by means of a treatment step, e.g., another membrane filtering step, such as a reverse osmosis filtering step, and/or an ion exchange step and/or an activated carbon step and/or a step of adding a chemical and/or pH adjustment component, such as an amine solution, and/or degassing, e.g., by a thermal step, or the like. In particular, the addition of a pH adjustment component helps to prevent corrosion of the steam generator.

In one embodiment, the method of the invention further comprises the step of mixing condensates generated in the organic material conversion process and/or a processing step of the conversion product into the process water obtained in the first separation step prior to the second separation step and/or into the second component prior to the membrane filtering step and/or into the permeate of the membrane filter. In this way, these condensates, e.g., condensates generated in an HTC process, can be treated together with the process water in the second separation step and/or the membrane filtering step and/or the combustion step, thus enhancing the efficiency of the treatment process.

The processing step of the conversion product may be, for example, a drying step, a further separation step, e.g., by evaporation, or the like. In particular, the condensates may be dryer condensates, e.g., obtained in a process of drying wet HTC coal or coal-like material.

The membrane filtering step produces a retentate which has a medium to high level of COD depending on the COD level of the second component and/or the COD level of the condensates, if these are mixed with the process water obtained in the first separation step and/or with the second component prior to the membrane filtering step.

The second component and one or more condensates generated in the organic material conversion process and/or a processing step of the conversion product can be concentrated by the membrane filtering step, leading to a permeate with a low and bio-degradable COD which can be easily disposed of.

According to the second aspect, the present invention provides an apparatus for the treatment of process water from an organic material conversion process, the apparatus comprising a first separation unit for separating the process water from a conversion product obtained in the organic material conversion process and a second separation unit connected to the first separation unit.

The second separation unit is arranged to receive the process water from the first separation unit and to separate the process water into a first component and a second component so that a level of chemical oxygen demand in the first component is higher than a level of chemical oxygen demand in the second component. Further, the apparatus comprises a membrane filter connected to the second separation unit and comprising a dense membrane, wherein the dense membrane is arranged to receive the second component from the second separation unit and to filter the second component.

Preferably, herein, the dense membrane is a membrane with a salt retention of 90% or more, more preferably 92% or more, yet more preferably 94% or more, still more preferably 96% or more and yet still more preferably 98% or more for 32,000 ppm NaCl as the salt at a pressure of 55 bar, a temperature of 25°C and a membrane yield of 10%, as has been detailed above.

The dense membrane may be a membrane which is configured so that a permeate of the membrane filter has a level of COD of less than 2.5 g/l and contains less than 2% of monovalent and polyvalent ions present in the process water obtained in the first separation unit.

The first separation unit may be a filter, a thermal separation unit, such as an evaporator, a combined mechanical and thermal separation unit or the like.

The apparatus according to the invention provides the advantageous effects already described in detail above for the method of the invention. In particular, the apparatus enables an efficient and inexpensive treatment of process water from an organic material conversion process.

In one embodiment, the organic material conversion process is a hydrothermal carbonisation process. In this case, the apparatus of the invention can be used in a particularly advantageous manner, as has been explained in detail above.

The second separation unit may be a nanofiltration unit, an evaporation unit or a combined nanofiltration and evaporation unit. The nanofiltration unit may be a membrane filter comprising a nanofiltration membrane. The nanofiltration unit, the evaporation unit and the combined nanofiltration and evaporation unit are configured to perform the nanofiltration step, the evaporation step and the combined nanofiltration and evaporation step, respectively, which have been described in detail above.

Further, the dense membrane of the membrane filter may be a reverse osmosis membrane.

The apparatus of the invention may further comprise a combustion unit for combusting at least a part of the first component and/or at least a part of a retentate of the membrane filter. The combustion unit is configured to perform the combustion step of the method of the invention as detailed above. The combustion unit may be a furnace, a kiln, an oven or the like.

The apparatus may further comprise a heat transfer unit, such as a heat exchanger, a heat pipe or any type of heat carrier, such as oil or the like, for transferring combustion heat from the combustion unit. In this way, at least a part of the combustion heat generated in the combustion unit can be used in the organic material conversion process and/or a processing step of the conversion product. In particular, the heat transfer unit may be configured to transfer at least a part of the combustion heat from the combustion unit to a steam generator, so that at least a part of the combustion heat can be used for the generation of steam in the steam generator.

The apparatus of the invention may further comprise a recirculation unit for returning at least a part of the permeate of the membrane filter to the organic material conversion process. The recirculation unit may comprise one or more pumps for conveying at least a part of the membrane filter permeate.

Moreover, the apparatus may further comprise a mixing unit for mixing condensates generated in the organic material conversion process and/or a processing step of the conversion product into the process water obtained from the first separation unit and/or the second component and/or the permeate of the membrane filter. The mixing unit may be a receptacle, such as a pipe, a tube, a vessel or the like, in which the condensates and the process water and/or the second component and/or the membrane filter permeate are mixed.

The apparatus may comprise a plurality of mixing units, e.g., two or more, three or more or four or more mixing units. For example, the apparatus may comprise a mixing unit for mixing condensates generated in the organic material conversion process and/or a processing step of the conversion product into the process water obtained from the first separation unit and/or a mixing unit for mixing condensates generated in the organic material conversion process and/or a processing step of the conversion product into the second component and/or a mixing unit for mixing condensates generated in the organic material conversion process and/or a processing step of the conversion product into the permeate of the membrane filter.

The apparatus of the invention is an apparatus for performing the method of the invention. Hence, the further features disclosed in connection with the above description of the method of the invention may also be applied to the apparatus of the invention.

### Brief Description of the Drawings

Hereinafter, non-limiting examples are explained with reference to the drawings, in which:
- Fig. 1: shows a schematic view of an apparatus according to an embodiment of the present invention; and
- Figs. 2(a) to 2(c): show schematic views of second separation units of apparatuses according to different embodiments of the present invention.

### Detailed Description of Preferred Embodiments

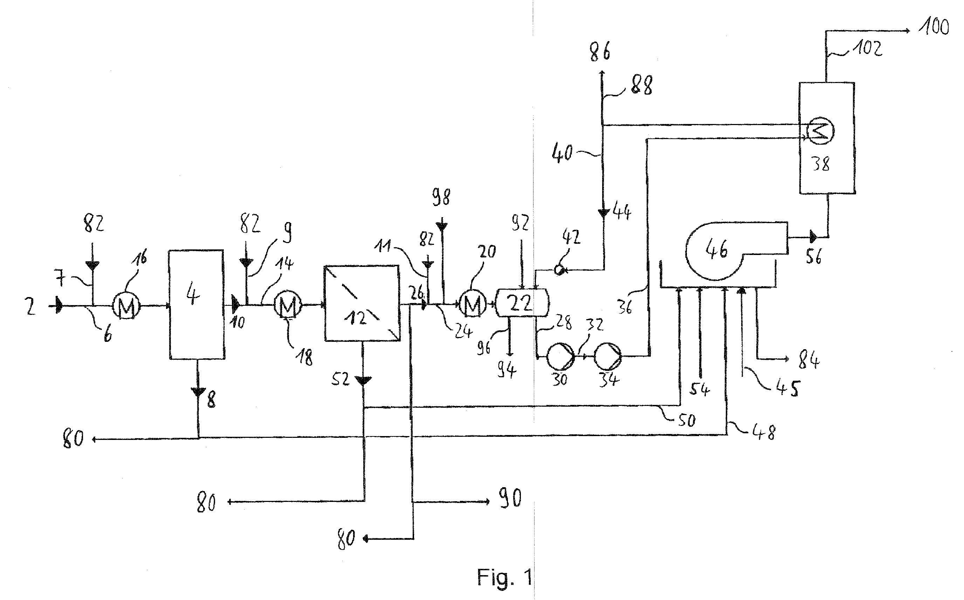

Fig. 1 shows a schematic view of an apparatus according to a preferred embodiment of the present invention.

The apparatus shown in Fig. 1 comprises a first separation unit (not shown) for separating the process water 2 from a conversion product obtained in the organic material conversion process, such as an HTC process, and a second separation unit 4 connected to the first separation unit through a pipe 6, wherein the second separation unit 4 is arranged to receive the process water 2 from the first separation unit through the pipe 6 and to separate the process water 2 into a first component 8 and a second component 10 so that a level of COD in the first component 8 is higher than a level of COD in the second component 10.

Further, the apparatus comprises a membrane filter 12 connected to the second separation unit 4 through a pipe 14 and comprising a dense membrane, wherein the dense membrane is arranged to receive the second component 10 from the second separation unit 4 and to filter the second component 10.

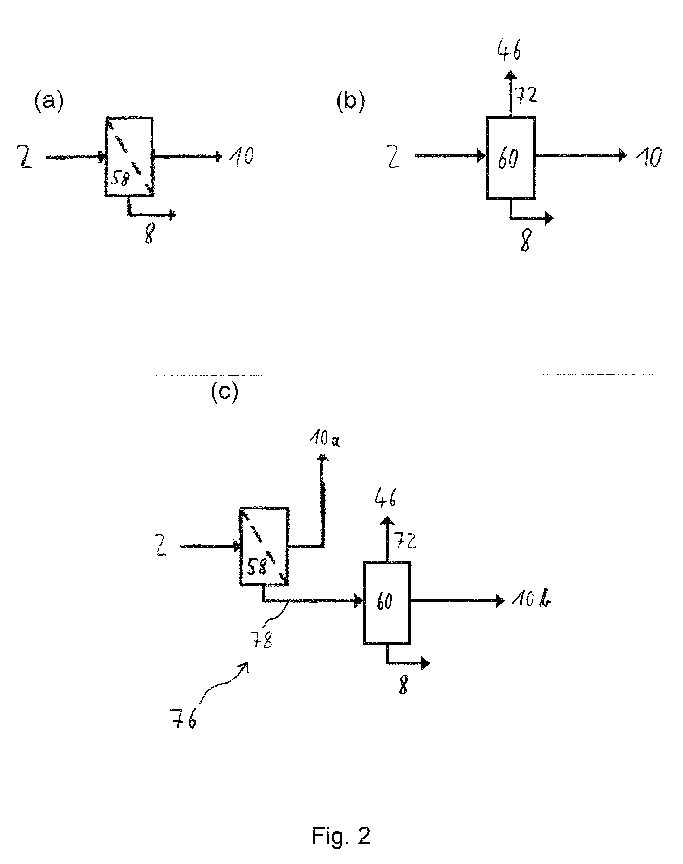

The dense membrane of the membrane filter 12 is a reverse osmosis membrane. The second separation unit 4 may be a nanofiltration unit, an evaporation unit or a combined nanofiltration and evaporation unit, as will be explained in detail below with reference to Figs. 2(a) to (c).

Moreover, the apparatus comprises a first heat exchanger 16 for cooling the process water 2, a second heat exchanger 18 for cooling the second component 10 and a third heat exchanger 20 for pre-heating a permeate 26 of the membrane filter 12. The membrane filter 12 is connected to a feed water tank 22 through a pipe 24. The permeate 26 of the membrane filter 12 is fed to the feed water tank 22 through the pipe 24 and pre-heated by the third heat exchanger 20 which is arranged in the pipe 24.

The feed water tank 22 is connected through a pipe 28 to a feeding pump 30 which is connected through a pipe 32 to a high pressure pump 34. The high pressure pump 34 is connected through a pipe 36 with a steam generator 38. The steam generator 38 is connected to the feed water tank 22 through a pipe 40 via a steam trap 42, thus forming a loop.

Feed water from the feed water tank 22 is fed to the steam generator 38 by the feeding pump 30 and the high pressure pump 34 and used for the generation of steam in the steam generator 38. Hence, the feeding pump 30 and the high pressure pump 34 form a recirculation unit for returning at least a part of the membrane filter permeate 26 to the organic material conversion process. A condensate 44 from the steam generator 38 is fed through the pipe 40 to the steam trap 42, where remaining steam is separated from the condensate 44, and subsequently supplied to the feed water tank 22. Burned flue gases 100 including vapour are discharged from the steam generator 38 through a pipe 102. The apparatus further comprises a combustion unit 46 which is connected to the second separation unit 4 through a pipe 48 and to the membrane filter 12 through a pipe 50 so that at least a part of the first component 8 and/or at least a part of a retentate 52 of the membrane filter 12 can be fed to the combustion unit 46 for combustion thereof. Moreover, the combustion unit 46 may be supplied with additional fuel 54, such as biogas, fuel oil, natural gas or the like. Further, the combustion unit 46 is supplied with air for the combustion through an air supply line 45. Heat 56 produced in the combustion unit 46 is used for the generation of steam in the steam generator 38.

One or more condensates 82 generated in the organic material conversion process and/or a processing step of the conversion product may be mixed into the process water 2 obtained in the first separation step through a pipe 7 and/or into the second component 10 prior to the membrane filtering step through a pipe 9 and/or into the permeate 26 of the membrane filter 12 through a pipe 11. Each of the pipes 7, 9, 11 forms a mixing unit for mixing one or more condensates 82 into the process water 2, the second component 10 and the membrane filter permeate 26, respectively.

The second separation unit 4 may be a nanofiltration unit 58, as is schematically shown in Fig. 2(a). The nanofiltration unit 58 comprises a nanofiltration membrane separating the process water 2 into a retentate as the first component 8 and a permeate as the second component 10. The nanofiltration membrane can be a membrane retaining most of the salt load in the process water 2 or a membrane passing most of the salt load in the process water 2.

Alternatively, the second separation unit 4 may be an evaporation unit 60, as is schematically shown in Fig. 2(b). The evaporation unit 60 is connected with a heat source (not shown) for evaporating the process water 2 fed to the evaporation unit 60. The evaporation unit 60 produces a concentrate as the first component 8 and a vapour as the second component 10. The vapour may be fed to a condenser (not shown) which is connected to a cooling source (not shown), such as a cooling water cycle. In this case, the vapour is condensed in the condenser and the resulting condensate is fed to the membrane filter 12. The condensate may be further cooled prior to the membrane filtering step by a fourth heat exchanger (not shown). Flue gases 72 from the evaporation unit 60 and/or the condenser are discharged, e.g., by a vacuum source, such as a vacuum pump, and may be supplied to the combustion unit 46.

Further, the second separation unit 4 may be a combined nanofiltration and evaporation unit 76, as is schematically shown in Fig. 2(c). In this case, the nanofiltration unit 58 is connected to the evaporation unit 60 through a pipe 78. Process water 2 fed to the nanofiltration unit 58 is separated into a permeate 10a and a retentate which is supplied to the evaporation unit 60 through the pipe 78. The retentate of the nanofiltration unit 58 is evaporated in the evaporation unit 60, thereby separating the retentate into a concentrate as the first component 8 and a vapour 10b.

The vapour 10b may be fed to a condenser (not shown) and condensed in the same manner as described above with reference to Fig. 2(b). The permeate 10a of the nanofiltration unit 58 and/or the condensed vapour 10b of the evaporation unit 60 constitute the second component 10 of the combined nanofiltration and evaporation unit 76 and are fed to the membrane filter 12.

In the following, examples of an operation of the apparatus shown in Fig. 1 are presented, exemplifying different embodiments of the method of the invention.

A first example is performed using the apparatus shown in Fig. 1 having a nanofiltration unit 58 as schematically shown in Fig. 2(a) as the second separation unit 4. The nanofiltration unit 58 comprises a nanofiltration membrane passing most of the salt load in the process water 2.

A biomass, e.g., leaves from street collection, with a total solids content of 40% and a mass flow of 1.6 t/h with a high salt content is mixed with 0.7 t/h of low salt process water with a concentration of 2 g/l and 0.26 t/h of steam and fed to an HTC process with a total solids content of approximately 25%.

The first separation step of the HTC product coal slurry by filtration and cooling by the first heat exchanger 16 leads to the generation of 1.8 t/h of HTC process water 2 with a temperature of 50°C, a salt content of 2 g/l with monovalent and polyvalent ions present and a total COD of 50 g/l. The subsequent nanofiltration step with a nanofiltration membrane retaining 50% of the polyvalent ions and 20% of the monovalent ions at a pressure of 20 bar and a membrane yield of 61% leads to the generation of a retentate as the first component 8 with a mass flow of 0.7 t/h, a total solids content of 98 g/l, a lower heating value of 15 MJ/kg total solids, a COD of 100 g/l, a salt content of 1.8 g/l and an ash content of 21.1% of the total solids.

The low salt retentate 8 with a salt content of 1.8 g/l containing only 35% of the original salt in the process water 2, most of which are polyvalent ions (over 71%), can be used in the mixing step of the HTC process where biomass is mixed with the retentate 8 at a mass flow of 0.7 t/h.

Specifically, as is schematically shown in Fig. 1, at least a part of the retentate of the nanofiltration unit 58 can be fed to a mixing stage 80 of the HTC process.

The permeate 10 of the nanofiltration unit 58 with a mass flow of 1.1 t/h, a medium COD of 18 g/l, a high salt content of 2.1 g/l, comparable to the salt content of the process water input to the nanofiltration unit 58, and a pH value of 4.2 is mixed with cooled condensates 82 from the HTC process, such as dryer condensates or condensates from excess process steam sources, with a mass flow of 0.63 t/h, a medium COD of 32 g/l, a low salt content and a pH value of 3.6 and fed to the membrane filter 12 which comprises a reverse osmosis membrane. Alternatively or additionally, the cooled condensates 82 may be supplied to the process water 2 prior to the nanofiltration step and/or to the permeate 26 of the membrane filtering step.

The retentate 52 of the membrane filter 12 with a mass flow of 0.26 t/h, a high COD of 153 g/l and a high salt content of 8.9 g/l is fed to the combustion unit 46 through the pipe 50. The permeate 26 of the membrane filter 12 with a mass flow of 1.47 t/h and a low COD below 2 g/l, which is easily biologically degradable, can be disposed to a public or industrial sewage system or a waste water treatment plant 90 after neutralisation to a pH value of 6.5. Refractory COD, total COD, water and most of the salts are excluded from the HTC process. The retentate 8 of the nanofiltration unit 58 is supplied as return water to the mixing stage 80 of the HTC process at a sufficient rate for ensuring a total solids content of approximately 25% of the biomass input to the HTC process.

In a second example, the apparatus shown in Fig. 1 having a nanofiltration unit 58 as schematically shown in Fig. 2(a) as the second separation unit 4 is used. The nanofiltration unit 58 comprises a nanofiltration membrane retaining most of the salt load in the process water 2.

A biomass, e.g., leaves from street collection, with a total solids content of 40% and a mass flow of 1600 kg/h with a high salt content is mixed with 740 kg/h of low salt process water and 0.26 t/h of low salt steam in the mixing stage 80 and fed with a total solids content of approximately 25% to an HTC process.

The first separation step of the HTC product coal slurry by filtration and cooling by the first heat exchanger 16 leads to the generation of 1800 kg/h of HTC process water 2 with a temperature of 50°C, a salt content of 3 g/l with monovalent and polyvalent ions present at a ratio of 1:1., a total COD of 81 g/l and a BOD5 of 22 g/l. The subsequent nanofiltration step with a nanofiltration membrane retaining 90% of the polyvalent ions and 50% of the monovalent ions at a pressure of 20 bar and a membrane yield of 53% leads to the generation of a nanofiltration membrane retentate 8 with a mass flow of 850 kg/h, a total solids content of 15 mass-%, a lower heating value of 15 MJ/kg total solids, a COD of 149 g/l, a salt content of 4.4 g/l and an ash content of 21.1% of the total solids.

The nanofiltration membrane retentate 8 containing 70% of the original salts, most of which are polyvalent ions (approximately 64%), can only be used in the combustion unit 46 at a rate of 850 kg/h, leading to the generation of 3.8 kg/h of salts in the ash 84 of the burning process in the combustion unit 46 and 846.2 kg/h of vapour and burned organics in the flue gas 100. The steam 86 which is generated in the steam generator 38 is supplied to the HTC process through a pipe 88 for heating up the biomass input to the HTC process.

The retentate 8 of the nanofiltration unit 58 can be burned in the combustion unit 46 with a thermal output of 90 kW.

The permeate 10 of the nanofiltration unit 58 with a mass flow of 950 kg/h, a medium COD of 22 g/l, a medium salt content of 1.7 g/l and a pH value of 4.2 is mixed with cooled condensates 82 from the HTC process with a mass flow of 630 kg/h, a medium COD of 28 g/l, a low salt content and a pH value of 3.6 and fed to the membrane filter 12 with a mass flow of 1580 kg/h, a COD of 24.4 g/l and a salt content of 1 g/l with 83% monovalent and 17% polyvalent ions. The membrane filter 12 comprises a reverse osmosis membrane.

The retentate 52 of the membrane filter 12 with a mass flow of 240 kg/h, a high COD of 152 g/l and a medium salt content of 6.8 g/l is fed through the pipe 50 to the combustion unit 46 where salts at a mass flow of 1.6 kg/h and vapour with a mass flow of 238 kg/h are produced. The retentate 52 of the membrane filter 12 can be burned in the combustion unit 46 with a thermal output of 25 kW. A part of the permeate 26 of the membrane filter 12 at a flow rate of 740 kg/h is used in the mixing stage 80 of the HTC process to adjust the total solids content of the biomass to the desired value. The remaining part of the permeate 26 of the membrane filter 12 with a mass flow of 600 kg/h and a low COD below 1.8 g/l, which is easily biologically degradable, can be disposed to a public or industrial sewage system or a waste water treatment plant 90 after neutralisation to a pH value of 6.5. A total amount of 600 kg/h of remaining permeate 26 of the membrane filter 12 must be disposed of.

In a third example, the apparatus shown in Fig. 1 having a nanofiltration unit 58 as shown in Fig. 2(a) as the second separation unit 4 is used. The nanofiltration unit 58 comprises a nanofiltration membrane retaining most of the salt load in the process water 2. Further, in the third example, the permeate 26 of the membrane filter 12 is used as a fresh water substitute in the steam generator 38. At least a part of the permeate 26 may be pre-treated to improve the input quality to the steam generator 38 by means of a treatment step, e.g., another membrane filtering step, such as a reverse osmosis filtering step, and/or an ion exchange step and/or an activated carbon step and/or a step of adding a chemical, pH and/or thermal adjustment component, such as an amine solution, or the like.

A biomass, e.g., leaves from street collection, with a total solids content of 40%, a mass flow of 1600 kg/h and a high salt content is mixed with 740 kg/h of low salt process water and 0.26 t/h of low salt steam and fed to an HTC process with a total solids content of approximately 25%.

The first separation step of the HTC product coal slurry by filtration and cooling by the first heat exchanger 16 leads to the generation of 1800 kg/h of HTC process water 2 with a temperature of 50°C, a salt content of 3 g/l with monovalent and polyvalent ions present at a ratio of 1:1, a total COD of 81 g/l and a BOD5 of 22 g/l.

The subsequent nanofiltration step with a nanofiltration membrane retaining 90% of the polyvalent ions and 50% of the monovalent ions at a pressure of 20 bar and a membrane yield of 53% leads to the generation of a retentate 8 with a mass flow of 850 kg/h, a total solids content of 15 mass-%, a lower heating value of 15 MJ/kg total solids, a COD of 149 g/l, a salt content of 4.4 g/l and an ash content of 21.1% of the total solids. The retentate 8 of the nanofiltration unit 58 containing 70% of the original salts, most of which are polyvalent ions (approximately 64%), can only be used in the combustion unit 46 at a rate of 850 kg/h, leading to the generation of 3.8 kg/h of salts in the ash 84 and 846.2 kg/h of vapour and burned organics in the flue gas 100. The retentate 8 of the nanofiltration unit 58 can be burned in the combustion unit 46 with a thermal output of 90 kW.

A permeate 10 of the nanofiltration unit 58 with a mass flow of 950 kg/h, a medium COD of 22 g/l, a medium salt content of 1.7 g/l and a pH value of 4.2 is mixed with cooled condensates 82 from the HTC process with a mass flow of 630 kg/h, a medium COD of 28 g/l, a low salt content and a pH value of 3.6 and fed to the membrane filter 12 with a mass flow of 1580 kg/h, a COD of 24.4 g/l and a salt concentration of 1 g/l with 83% monovalent and 17% polyvalent ions. The membrane filter 12 comprises a reverse osmosis membrane.

The retentate 52 of the membrane filter 12 with a mass flow of 240 kg/h, a high COD of 152 g/l and a medium salt content of 6.8 g/l is fed to the combustion unit 46 where salts at a mass flow of 1.6 kg/h and vapour with a mass flow of 238 kg/h is produced. The retentate 52 of the membrane filter 12 can be burned in the combustion unit 46 with a thermal output of 25 kW.

A part of the permeate 26 of the membrane filter 12 at a flow rate of 740 kg/h is used in the mixing stage 80 of the HTC process to adjust the total solids content of the biomass to the desired value. The remaining part of the permeate 26 of the membrane filter 12 with a mass flow of 600 kg/h is fed to the feed water tank 22. The remaining part of the permeate 26 of the membrane filter 12 is pre-heated in or before the feed water tank 22, e.g., by the third heat exchanger 20, and mixed with a chemical, pH and/or or thermal adjustment component 92, such as an amine solution (1 weight-%), which is supplied to the feed water tank 22. In this way, a steam generation mixture with a pH value above 9 is formed in the feed water tank 22.

The steam generation mixture is fed to the steam generator 38 by the feeding pump 30 and the high pressure pump 34. The steam generator 38 produces 600 kg/h of steam and condensate 44 enriched with salts which is returned to the feed water tank 22 through the pipe 40 via the steam trap 42. Desalination of the feed water tank 22 produces a salt concentrate 94 rich in acetates, formiates and other organic and/or inorganic salts which is removed from the feed water tank 22 through a pipe 96. A total water amount of 0 kg/h must be disposed to a public or industrial sewage system or a wastewater treatment plant 90. Hence, the HTC process is wastewater free.

In a fourth example, the apparatus shown in Fig. 1 having a combined nanofiltration and evaporation unit 76 as schematically shown in Fig. 2(c) as the second separation unit 4 is used. The nanofiltration unit 58 comprises a nanofiltration membrane retaining most of the salt load of the process water 2. The total solids content of the input biomass is low.

A biomass, e.g., brewer grains, with a total solids content of 30%, a mass flow of 833 kg/h and a high salt content is mixed with 73 kg/h of low salt process water and 94 kg/h of low salt steam and fed to an HTC process with a total solids content of approximately 25%.

The first separation step of the HTC product coal slurry by filtration and cooling by the first heat exchanger 16 leads to the generation of 732 kg/h of HTC process water 2 with a temperature of 50°C, a salt content of 3 g/l with monovalent and polyvalent ions present at a ratio of 1:1, a total COD of 42 g/l and a BOD5 of 14 g/l. The subsequent nanofiltration step in the nanofiltration unit 58 with a nanofiltration membrane retaining 90% of the polyvalent ions and 50% of the monovalent ions at a pressure of 20 bar and a membrane yield of 50% leads to the generation of a retentate with a mass flow of 366 kg/h, a total solids content of 7 mass-%, a lower heating value of 15 MJ/kg total solids, a COD of 67 g/l, a salt content of 6 g/l and an ash content of 21.1% of the total solids.

A total of 103 kW of thermal energy as auxiliary fuel, such as fossil fuel, are needed for the combustion of the retentate of the nanofiltration unit 58 in the combustion unit 46. A cooling cycle with water at a temperature of 90°C is used for vacuum evaporation of the retentate of the nanofiltration unit 58 in the evaporation unit 60 for a further thickening thereof.

An increase of 30 percentage points in yield can be achieved with the vacuum evaporation, leading to a concentrate 8 with a mass flow of 146 kg/h, a medium COD of 15C g/l and a high salt content of 10.5 g/l and a condensate, produced by condensing the vapour 10b from the evaporation unit 60 in the condenser (not shown), at a mass flow of 220 kg/h and a COD of 12 g/l, which is comparable to dryer condensates from the HTC process.

A thermal energy of 134 kW of low value cooling water is needed for the evaporation of the retentate of the nanofiltration unit 58. The concentrate 8 of the evaporation unit 60 containing 70% of the original salts, most of which are polyvalent ions (approximately 64%), can only be used in the combustion unit 46 at a mass flow of 146 kg/h, leading to the generation of 1.5 kg/h of salts in the ash 84 and 144 kg/h of vapour and burned organics in the flue gas 100. The concentrate 8 of the evaporation unit 60 can be burned in the combustion unit 46 with a thermal output of 64 kW and a mass flow of 146 kg/h of vapour and unburned organics in the flue gas 100 with a high exergy, which can generate high pressure steam in the steam generator 38.

The permeate 10a of the nanofiltration unit 58 with a mass flow of 366 kg/h, a medium COD of 22 g/l, a medium salt content of 1.8 g/l and a pH value of 4.2 is mixed with cooled condensates 82 from the HTC process with a mass flow of 235 kg/h and the condensate of the vapour 10b with a mass flow of 220 kg/h produced in the condenser (not shown) leading to a mass flow of 455 kg/h, a medium COD of 19 g/l, a low salt content and a pH value of 3.6, and is fed to the membrane filter 12 with a mass flow of 821 kg/h, a COD of 18.1 g/l and a salt concentration of 0.8 g/l, of which 83% are monovalent and 17% are polyvalent ions. The membrane filter 12 comprises a reverse osmosis membrane.

The retentate 52 of the membrane filter 12 with a mass flow of 123 kg/h, a high COD of 111 g/l, a total solids content of 12 mass-% and a medium salt content of 5.4 g/l, containing 30% of the salt load of the process water 2, is partly fed to the mixing stage 80 of the HTC process at a mass flow of 73 kg/h to adjust the total solids content of the biomass input to the HTC process to approximately 25%. The remaining part of the retentate 52 of the membrane filter 12 at a mass flow of 50 kg/h is burned in the combustion unit 46. Only 11% of the original monovalent ions are returned to the mixing stage 80 of the HTC process. The retentate 52 of the membrane filter 12 can be burned in the combustion unit 46 at a lower heating value of zero. Hence, less auxiliary fuel, such as biogas, fuel oil, natural gas or the like, is needed for the combustion of the retentate 52 of the membrane filter 12.

The permeate 26 of the membrane filter 12 at a flow rate of 698 kg/h and a low COD below 1.8 g/l, which is easily biologically degradable, can be disposed to a public or industrial sewage system or a wastewater treatment plant 90 after neutralisation to a pH value of 6.5. A total water amount of 698 kg/h must be disposed to the sewage system or wastewater treatment plant 90. A mass flow of 243 kg/h of the permeate 26 of the membrane filter 12 may be used in the steam generator 38 substituting the same amount of fresh water 98 which is otherwise supplied to the pipe 24 and mixed with the permeate 26 of the membrane filter 12 before the third heat exchanger 20. In this way, a reduced disposal amount of the permeate 26 of the membrane filter 12 at a mass flow of 455 kg/h can be achieved, while, at the same time, the fresh water consumption is reduced.

In the following, a comparative example is presented, demonstrating that a membrane filtering step in combination with a combustion step alone, i.e., without a second separation step prior to the membrane filtering step, does not allow for an appropriate treatment of the process water 2 and a suitable concentration of the process water 2 for economical combustion.

The process water 2 from the first separation step of an HTC product coal slurry with a mass flow of 1000 kg/h, a COD of 50 g/l and a salt load of 2 kg/h is directly fed to the membrane filter 12 without a second separation step. The membrane filter 12 comprises a reverse osmosis membrane. Only 370 kg/h of a permeate 26 are generated by the membrane filter 12 with a low salt load of the original salts present in the process water 2 and a low and biodegradable COD of 1.9 g/l.

The retentate 52 of the membrane filter 12 at a mass flow of 630 kg/h contains more than 98% of the salt load of the process water 2, a non-biodegradable COD of 78g/l, a total solids content of 80 g/l and a lower heating value of 15 MJ/kg total solids. This retentate 52 cannot be disposed to a public or industrial sewage system or a waste water treatment plant 90 due to its high COD level and cannot be returned to the mixing stage 80 of the HTC process to adjust the total solids content of the input biomass due to its high salt content.

The lower heating value of the retentate 52 of the membrane filter 12 is below zero and, thus, auxiliary and expensive fuel is needed to maintain a combustion flame. The energy of the total solids of the retentate 52 is 210 kW. An amount of energy of 386 kW is needed to evaporate the remaining water in the retentate 52 and therefore at least 176 kW of additional fuel 54 are needed to maintain the combustion flame in the combustion unit 46.

A comparison of the first to fourth examples according to the present invention with the comparative example demonstrates that the present invention provides a method for the treatment of process water from an organic material conversion process which is improved in terms of both efficiency and costs.

## Claims

1. A method for the treatment of process water (2) from an organic material conversion process, the method comprising
a first separation step of separating the process water (2) from a conversion product obtained in the organic material conversion process,
a second separation step of separating the process water (2) obtained in the first separation step into a first component (8) and a second component (10) so that a level of chemical oxygen demand in the first component (8) is higher than a level of chemical oxygen demand in the second component (10), and
a membrane filtering step of filtering the second component (10) using a membrane filter (12) comprising a dense membrane.

2. The method according to claim 1, wherein the organic material conversion process is a hydrothermal carbonisation process.

3. The method according to claim 1 or 2, wherein the second separation step is a nanofiltration and/or evaporation step.

4. The method according to any one of the preceding claims, wherein the membrane filtering step is a reverse osmosis filtering step using a reverse osmosis membrane filter.

5. The method according to any one of the preceding claims, further comprising a combustion step of combusting at least a part of the first component (8) and/or at least a part of a retentate (52) of the membrane filter (12) obtained in the membrane filtering step.

6. The method according to claim 5, wherein at least a part of a combustion heat generated in the combustion step is used in the organic material conversion process and/or a processing step of the conversion product.

7. The method according to any one of the preceding claims, further comprising a step of returning at least a part of the permeate (26) of the membrane filter (12) to the organic material conversion process.

8. The method according to claim 7, wherein at least a part of the permeate (26) of the membrane filter (12) is supplied to a steam generator (38) for generating steam to be used in the organic material conversion process.

9. The method according to any one of the preceding claims, further comprising the step of mixing condensates (82) generated in the organic material conversion process and/or a processing step of the conversion product into the process water (2) obtained in the first separation step prior to the second separation step and/or the second component (10) prior to the membrane filtering step and/or the permeate (26) of the membrane filter (12).

10. An apparatus for the treatment of process water (2) from an organic material conversion process, the apparatus comprising
a first separation unit for separating the process water (2) from a conversion product obtained in the organic material conversion process,
a second separation unit (4) connected to the first separation unit, wherein the second separation unit (4) is arranged to receive the process water (2) from the first separation unit and to separate the process water (2) into a first component (8) and a second component (10) so that a level of chemical oxygen demand in the first component (8) is higher than a level of chemical oxygen demand in the second component (10), and
a membrane filter (12) connected to the second separation unit (4) and comprising a dense membrane, wherein the dense membrane is arranged to receive the second component (10) from the second separation unit (4) and to filter the second component (10).

11. The apparatus according to claim 10, wherein the organic material conversion process is a hydrothermal carbonisation process.

12. The apparatus according to claim 10 or 11, wherein the second separation unit (4) is a nanofiltration and/or evaporation unit (58, 60, 76).

13. The apparatus according to any one of claims 10 to 12, wherein the dense membrane is a reverse osmosis membrane.

14. The apparatus according to any one of claims 10 to 13, further comprising a combustion unit (46) for combusting at least a part of the first component (8) and/or at least a part of a retentate (52) of the membrane filter (12).

15. The apparatus according to any one of claims 10 to 14, further comprising a recirculation unit (30, 34) for returning at least a part of the permeate (26) of the membrane filter (12) to the organic material conversion process.

16. The apparatus according to any one of claims 10 to 15, further comprising a mixing unit (7, 9, 11) for mixing condensates (82) generated in the organic material conversion process and/or a processing step of the conversion product into the process water (2) obtained from the first separation unit and/or the second component (10) and/or the permeate (26) of the membrane filter (12).
